(19) Europäisches Patentamt
European Patent Office
Office européen des brevets

(11) Publication number: 0 031 434 B1

(12) **EUROPEAN PATENT SPECIFICATION**

(45) Date of publication of patent specification: **20.02.85**

(51) Int. Cl.[4]: **C 08 L 67/06,** C 08 F 299/04

(21) Application number: **80107069.9**

(22) Date of filing: **14.11.80**

(54) **Improved polyester fiber reinforced molding compounds.**

(30) Priority: **16.11.79 US 94949**
**16.10.80 US 194070**

(43) Date of publication of application:
**08.07.81 Bulletin 81/27**

(45) Publication of the grant of the patent:
**20.02.85 Bulletin 85/08**

(84) Designated Contracting States:
**AT BE CH DE FR GB IT LI NL SE**

(56) References cited:
**DE-B-1 269 806**
**NL-A-7 509 319**
**US-A-3 060 147**
**US-A-3 549 586**
**US-A-4 160 759**

**ENCYCLOPEDIA OF POLYMER SCIENCE AND TECHNOLOGY, vol. 6, 1967, Interscience Publishers, NEW YORK (US)**

(73) Proprietor: **UNION CARBIDE CORPORATION**
**Old Ridgebury Road**
**Danbury Connecticut 06817 (US)**

(72) Inventor: **Atkins, Kenneth Earl**
**1311 Martha Road**
**South Charleston 25303 West Virginia (US)**
Inventor: **Gentry,Robert Ray**
**111 Riverview Drive**
**St. Albans,West Virginia 25177 (US)**

(74) Representative: **Schmied-Kowarzik, Volker, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 031 434 B1

**Description**

This invention pertains to low shrink thermosetting polyester molding compositions and more particularly to those containing low profile additives and epoxy additives.

Unsaturated polyester resins have been employed commercially in various fiber reinforced fabrication systems including among others matched metal-die compression, transfer, and injection molding. These systems involve curing a formulated compound at high temperatures and pressures in hardened and chrome-plated molds. These methods provide the highest volume and highest part uniformity of any thermoset molding technique.

A technical improvement that has made a significant contribution to commercial thermosetting molding technology is the use of low profile additives to reduce shrinkage during the curing reaction, and to thereby improve dimensional stability and surface smoothness. Low profile additives are, in general, thermoplastic polymers, such as, vinyl acetate polymers, polystyrene, acrylic polymers, and polycaprolactones. There are a number of theories that seek to explain the low profile or anti-shrinkage action of these polymers, but the one that seems to best explain the phenomenon is the following:

The low profile additive is at least partly soluble in the uncured thermosetting resin such as a polyester/styrene solution. As the polyester/styrene mixture crosslinks, the thermoplastic polymer becomes incompatible or less soluble and at least partly comes out of solution. This action causes a volume expansion that compensates for the shrinkage that occurs when the polyester/styrene mixture crosslinks.

A major advance in commercial thermosetting molding technology was the introduction several years ago of chemically thickened systems. Chemical thickening is always employed in sheet molding compounds ("SMC"), and is increasingly being used in bulk molding compounds ("BMC"). In such systems, an alkaline material such as magnesium oxide or magnesium hydroxide is added to, for example, an uncured polyester along with fillers, glass fiber, and other standard materials. The alkaline material interacts with residual acidity in the polyester to build viscosity. The thickened system is relatively tackfree and easy to handle, and the high viscosity carries the glass fiber reinforcement to the extremities of the mold during crosslinking of the system. Thus, the use of thickened systems has made a major contribution to the commercial expansion of polyester molding.

While low profile unsaturated polyester fiber glass reinfoced molding systems have gained wide acceptance in the transportation industry because of good surface appearance, dimensional stability, physical properties, productions and assembly costs and weight savings versus metal, there is still a need for further improvement in reducing rippling and waviness in surface sensitive areas that are molded down a "draw" area of the mold.

In accordance with the present invention, there is provided means for making low shrink curable molding compositions having improved surface appearance. This is accomplished by a composition comprising:

(a) a thermosetting polyester resin;

(b) an olefinically unsaturated monomer that is copolymerizable with polyester resins;

(c) a thermoplastic low profile additive for shrinkage control; and

(d) a epoxy compound containing at least one 1, 2-epoxy group per molecule.

Thermosetting polyester resins suitable for use in accordance with the invention are polyester resins that are reaction products of a dicarboxylic acid or anhydride, with a polyhydric alcohol. The dicarboxylic acids or anhydrides that are employed to produce the polyester, either singly or in combination, must include those that contain olefinic unsaturation, preferably wherein the olefinic unsaturation is alpha, beta- to at least one of the carboxylic acid groups. Such acids include maleic acid or anhydride, fumaric acid, methyl maleic acid, and itaconic acid. Maleic acid or anhydride and fumaric acid are the most widely used commercially.

In addition to the olefinically unsaturated acid or anhydride, saturated and/or aromatic dicarboxylic acids or anhydrides can also be employed in producing the polyester. Such acids include phthalic acid or anhydride, terephthalic acid, hexahydrophthalic acid or anhydride, adipic acid, isophthalic acid, and "dimer" acid (i.e., dimerized fatty acids).

A polyol is also employed to produce the polyester. Such polyols include ethylene glycol, diethylene glycol, propylene glycol, dipropylene glycol, butylene glycols, neopentyl glycol, glycerol and 1,1,1-trimethylolpropane. As a rule, not more than about 20 mole percent of the polyol will be a triol, with the remainder being one or more diols.

As is known in the art, polyesters that are employed in thickened molding compositions must contain residual acidity in order to enter into the thickening reaction. The nature and production of the polyesters used in such applications, such as, dicyclopentadiene modified resins are known in the art and are described in U.S.—A 3,933,757 and U.S.—A 3,883,612.

Vinyl ester resins that have been advantageously employed in both bulk molding compounds (BMC) and sheet molding compounds (SMC) are resins wherein the secondary hydroxyl group formed by the interaction of an epoxide group with a carboxylic acid group has been reacted with a dicarboxylic acid anhydride to produce pendant carboxylic acid groups. A variety of saturated and unsaturated anhydrides similar to those described as useful in preparing polyester resins may be used in proportions of at least

about 0.1 mole of anhydride per equivalent of hydroxyl group up to an amount sufficient to react with each hydroxyl.

Thermosetting resins that are classified herein as vinyl ester resins, which contain the characteristic linkages and terminal, polymerizable unsaturated groups, are fully disclosed in U.S. Patent No. 3,887,515 to Pennington et al along with the preparation of such resins and further description of these well known resins is unnecessary herein.

The curable compositions of the invention also contain a monomer that contains ethylenic unsaturation, and which is copolymerizable with the polyester and terminally unsaturated vinyl ester resins. Styrene is the preferred monomer in commercial practice today, although others can be used.

The said monomer is also employed in the resin composition for the purpose of dissolving the thermosetting resin (which is a solid at ambient temperatures, i.e., about 20°—25°C.) to ensure that the resin composition is a fluid. Enough monomer is employed so that the thickness or viscosity of the fluid is such that the fluid can be processed conveniently. Excessive amounts of the monomer are normally to be avoided, because such excess can have an adverse effect on properties. For instance, too much of the monomer may tend to cause embrittlement of the cured polyester. Within these guidelines, effective proportions of the monomer are normally found within the range of from about 25 to about 70, and preferably 40 to 55, weight percent, based on weight of thermosetting resin plus monomer, plus thermoplastic additive.

When desired a thickening agent can also be employed in the compositions of the invention. Such materials are known in the art, and include the oxides and hydroxides of the metals of Group I, II and III of the Periodic Table. Illustrative examples of thickening agents include magnesium oxide, calcium oxide, calcium hydroxide, zinc oxide, barium oxide, magnesium hydroxide, and the like, including mixtures of the same. Thickening agents are normally employed in proportions of from about 0.1 to about 6 weight percent, based upon weight of polyester resin, plus monomer, plus low profile additive.

Alternatively a dual thickening system may be employed wherein, for example, a metallic oxide or hydroxide and polyisocyanate in amounts of polyisocyanate sufficient to react with at least thirty percent of the hydroxyl groups but not more than one hundred and five percent of the hydroxyl groups present and an amount of metallic oxide or hydroxide sufficient to react with at least thirty percent of the carboxyl groups but not more than seventy-four percent of the carboxyl groups present. Reference is made to Belgium Patent No. 849,135 to Epel et al. for a description of such dual thickening systems.

An essential component of the compositions of the invention are thermoplastic low profile additives. In one aspect, the low profile additives that may be employed in the invention are thermoplastic polymers of vinyl acetate, saturated thermoplastic polyesters, and mixtures of the same. In another aspect of the invention, the low profile additive that may be employed are thermoplastic polyalkyl methacrylate polymers.

Suitable thermoplastic vinyl acetate polymer low profile additives are poly (vinyl acetates) homopolymers and thermoplastic copolymers containing at least 50 weight percent vinyl acetate. Such polymers include, for example, vinyl acetate homopolymer; carboxylated vinyl acetate polymers including copolymers of vinyl acetate and ethylenically unsaturated carboxylic acids, such as acrylic acid, methacrylic acid, maleic acid, fumaric acid, itaconic acid and the like or anhydrides such as maleic anhydride; vinyl acetate/vinyl chloride/maleic acid terpolymer, and the like. Reference is made to U.S. Patent No. 3,718,714 to Comstock et al. and British Patent No. 1,361,841 to Comstock et al. for descriptions of some of the suitable vinyl acetate polymer low profile additives.

The useful vinyl acetate polymer low profile additives ordinarily have molecular weights within the range of from about 10,000 to about 250,000, and preferably from about 25,000 to about 175,000. They are usually employed in proportions of from about 5 to 25, and preferably from about 9 to 16, weight per cent, based on weight of polyester plus thermoplastic, plus monomer.

Suitable thermoplastic saturated polyester low profile additives are, in general, low molecular weight saturated polymers of polymerizable linear and/or cyclic esters and carboxylated saturated polymers of said polymerizable esters having at least one carboxyl group per molecule.

Polymers of linear and/or cyclic esters, including carboxylated polymers having an average of at least one carboxyl group per molecule which may be used in accordance with the present invention are those which possess a reduced viscosity of at least about 0.1, and preferably from about 0.15 to about 15 and higher. The preferred polymers of cyclic esters have a reduced viscosity of about 0.2 to about 10.

Suitable polymers are further characterized by the following basic recurring structural Unit I

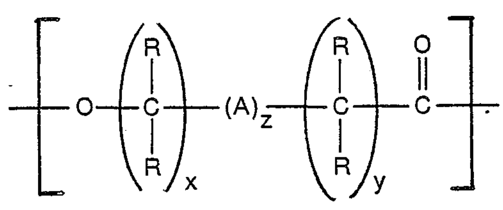

wherein each R, which can be the same or different, is hydrogen, halogen, i.e. chlorine, bromine, iodine, or

fluorine, or a monovalent hydrocarbon radical generally containing a maximum of 12 carbon atoms, and preferably containing a maximum of eight carbon atoms. A is an oxy group; x is an integer having a value of 1 to 4 inclusive, y is an integer having a value of 1 to 4 inclusive, z is an integer having a value of 0 or 1, with the proviso that (a) the sum of $x + y + z$ is 4 to 6 inclusive and (b) the total number of R variables which are substituents other than hydrogen does not exceed 2.

Illustrative of suitable monovalent hydrocarbon radicals for R are the following: alkyl radicals, e.g. with 1—6 or 1—4 C-atoms, such as methyl, ethyl, propyl, isopropyl, n-butyl, sec-butyl, t-butyl, n-hexyl, 2-ethylhexyl, n-dodecyl, optionally substituted by chlorine or bromine such as chloroethyl, chloropropyl and the like; alkoxy radicals (for alkyl see the above definition) such as methoxy, ethoxy, n-propoxy, n-hexoxy, n-dodecoxy and the like; aryl radicals such as phenyl, $C_{1-4}$ alkylphenyl such as ethyl phenyl, n-propylphenyl, n-butylphenyl and the like; aryloxy radicals such as phenoxy, $C_{1-4}$ alkylphenoxy such as n-propylphenoxy, n-butylphenoxy and the like; cycloaliphatic radicals such as cyclopentyl, cyclohexyl and the like.

In one embodiment, desirable polymers of cyclic esters are characterized by both basic recurring structural Unit I supra and basic recurring structural Unit II, as are obtained from a mixture containing a cyclic ester and a cyclic monomer such as ethylene oxide, propylene oxide and the like.

Unit II 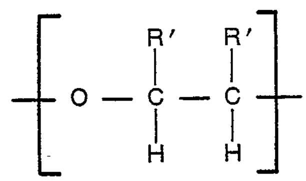

wherein each R′, is as defined for R of Unit I, or in which the two R′ variables together with the ethylene moiety of the oxyethylene chain of Unit II form a saturated cycloaliphatic hydrocarbon ring having from four to eight carbon atoms inclusive. It is preferred that recurring Unit II contains from two to twelve carbon atoms inclusive. The interconnection of Unit I and Unit II does not involve or result in the direct bonding of two oxy groups i.e., —O—O—.

Particularly preferred polymers of cyclic esters are those which are characterized by the oxypentamethylenecarbonyl chain as seen in basic recurring structural Unit III

Unit III 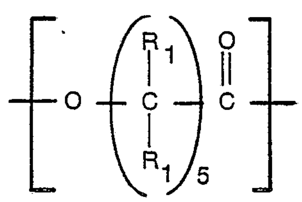

wherein each $R_1$ is hydrogen or lower alkyl, that is alkyl having a maximum of 4 carbon atoms, (see the definition of R) with the proviso that no more than three $R_1$ variables are substituents other than hydrogen.

Thermoplastic saturated polymers of linear and/or cyclic esters are well known and the carboxylated saturated esters are well known and such thermoplastic saturated polymers, and particularly polymers prepared from epsilon caprolactones, have been advantageously employed as low profile additives. Reference, for example, is made to U.S. Patent Nos. 3,549,586 and 3,668,178 to Comstock et al. for descriptions of thermoplastic saturated polyester low profile additives prepared from cyclic esters.

The thermoplastic saturated polyester low profile additives may usually be employed in the compositions of the invention in proportions similar to those of thermoplastic vinyl acetate polymers, i.e., in proportions from about 5 to 25 weight percent, and preferably from about 10 to 20 weight percent, based on the weight of polyester, plus thermoplastic polymer, plus monomer.

Also suitable in certain aspects of the invention are thermoplastic polyalkyl acrylate or methacrylate low profile additives including, for example, homopolymers of methyl methacrylate, ethyl methacrylate, butyl methacrylate, methyl acrylate, ethyl acrylate; copolymers of methyl methacrylate and lower alkyl esters of acrylic and methacrylic acids, and copolymers of methyl methacrylate with minor amounts of one or more of the following: lauroyl methacrylate, isobornyl methacrylate, acrylamide, hydroxyethyl methacrylate, styrene, 2-ethylhexyl acrylate, acrylonitrile, methacrylic acid, polystyrene, styrene copolymers, such as, styrene/butadiene copolymers, cellulose acetate butyrate, alkylene oxide polymers, and the like.

Molecular weight of the alkyl acrylate or methacrylate polymers useful in the invention may vary over a wide range, from 10,000 to 1,000,000, and preferably from 25,000 to 500,000.

The thermoplastic polymer should be present in amounts ranging from 1 to 25 percent by weight, based on the weight of polyester, plus low profile additive, plus monomer, and preferably from 5 to 20 percent by weight.

An optional component of the compositions of the invention is a viscosity reducing agent. In one aspect, the invention employs, generally in combination with thermoplastic vinyl acetate polymer and thermoplastic saturated polyester low profile additives, a viscosity reducing agent which is an aliphatic monocarboxylic acid having at least 6 carbon atoms.

The aliphatic monocarboxylic acid employed usually has at least 6 carbon atoms in the chain, and is frequently a saturated or unsaturated fatty acid having from 6 to 24 or more carbon atoms in the chain. Such carboxylic acids may be caproic (hexanoic), caprylic (octanoic), capric ($C_{10}$), lauric ($C_{12}$), myristic ($C_{14}$), palmitic ($C_{16}$), palmitoleic ($C_{16}$), stearic ($C_{18}$), oleic ($C_{18}$), linoleic ($C_{18}$), linolenic ($C_{18}$), and the like acids, and the acids may be either straight chain or branched chain. Products in which mixtures of acids of the foregoing kind occur, such as tall oil acid, may be used.

The viscosity reducing agent can be present in amounts ranging from 0.4 to about 6 weight percent, and preferably from about 1 to 4 weight percent, based on the combined weight of thermosetting resin, copolymerizable monomer, and low profile additive.

The epoxy compounds of this invention can be based on aliphatic, cycloaliphatic or aromatic backbones. Thus for example are included the bisphenol A based epoxy resins.

One class of preferred thermosetting epoxy resins can be represented by the formula:

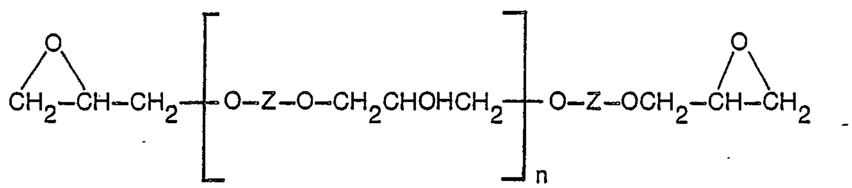

wherein n is an integer representing the number of repeating units and has a value of 0 to about 10 and Z is an arylene radical having 6 to about 20 carbons. The preferred arylene radical is:

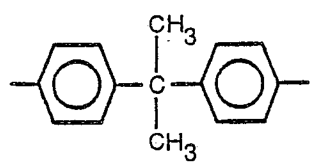

Still another preferred class of thermosetting epoxy resins are the 1,2-cycloaliphatic diepoxides. They are exemplified by the following:

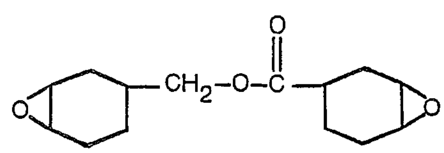

3,4-epoxycyclohexylmethyl-3,4-epoxycyclohexane carboxylate

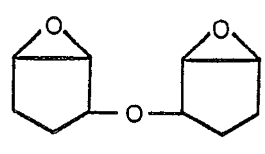

bis(2,3-epoxycyclopentyl)ether

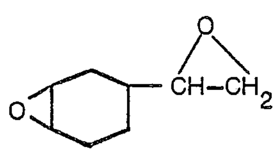

vinyl cyclohexene dioxide

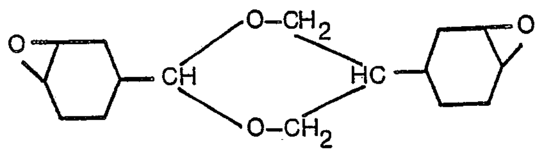

2-(3,4-epoxycyclohexyl-5,5-spiro)-(3,4-epoxy)cyclohexane-m-dioxane, and

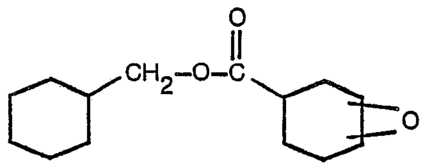

A general decription of the preparation of thermosetting epoxy resins is presented in the Encyclopedia of Polymer Science and Technology, pp. 209—216, Vol. 6, Interscience Publishers, N.Y.C. 1967.

A representative example of an aliphatic epoxy compound is epoxidized polybutadiene.

While the amount of epoxy compound used in the practice of the invention is not narrowly critical, it is preferred to use about 1 to about 25 parts per hundred parts of polyester resin plus unsaturated monomer plus low profile additive and even more preferred about 2 to 10 parts per hundred.

The polyester molding composition may also contain one or more of the known types of conventional additives, which are employed for their known purposes in the usual amounts. The following are illustrative of such additives:

1. Polymerization initiators such as *t*-butyl hydroperoxide, *t*-butyl perbenzoate, benzoyl peroxide, cumene hydroperoxide, methyl ethyl ketone peroxide, and others known to the art. The polymerization initiator is employed in a catalytically effective amount, such as from about 0.3 to about 2 to 3 weight percent, based on the weight of polyester plus monomer plus low profile additive;

2. Fillers such as clay, hydrated alumina, silica, calcium carbonate and others known to the art;

3. Reinforcing fillers such as glass fibers or fabrics, asbestos fibers or fabrics, various organic fibers or fabrics such as those made of polypropylene, acrylonitrile/vinyl chloride copolymer, and others known to the art; and

4. Mold release agents or lubricants, such as zinc stearate, calcium stearate, and others known to the art.

5. Rubbers or elastomers such as (a): homopolymers or copolymers of conjugated dienes having a weight average molecular weight of 30,000 to 400,000 or higher as described in U.S. Patent 4,020,036. The conjugated dienes contain from 4—12 carbon atoms per molecule such as 1,3-butadiene, isoprene, and the like; (b) epihalohydrin homopolymers, a copolymer of two or more epihalohydrin monomer, or a copolymer of an epihalohydrin monomer(s) with an oxide monomer(s) having a number average molecular weight (Mn) which varies from about 800 to about 50,000 as described in U.S. Patent 4,101,604; (c) chloroprene polymers including homopolymers of chloroprene and copolymers of chloroprene with sulfur and/or with at least one copolymerizable organic monomer wherein chloroprene constitutes at least 50 weight percent of the organic monomer make-up of the copolymer as described in U.S. Patent 4,161,471; (d) hydrocarbon polymers including ethylene/propylene dipolymers and copolymers of ethylene/propylene and at least one nonconjugated diene, such as ethylene/propylene-hexadiene terpolymers and ethylene/propylene/1,4-hexadiene/norbornadiene, as described in U.S. Patent 4,161,471; (e) conjugated diene butyl elastomers, such as copolymers consisting of from 85 to 99.5% by weight of a $C_4$—$C_7$ isolefin combined with 15 to 0.5% by weight of a conjugated multi-olefin having 4 to 14 carbon atoms, copolymers of isobutylene and isoprene where a major portion of the isoprene units combined therein have conjugated diene unsaturation as described in U.S. Patent 4,160,759.

All parts and percentages are by weight unless otherwise specified.

## EXPERIMENTAL SECTION

### General Procedure for Preparation of Bulk Molding Compound (BMC) Formulations

All the liquid components were weighed individually into a Hobart mixing pan placed on a Toledo balance. The pan was attached to a Model C—100 Hobart mixer (in a hood). The agitator was started at slow speed, then increased to medium speed to completely mix the liquids over a period of 3—5 minutes. The agitator was then stopped and the internal mold release agent and/or fatty acid was next added to the liquid from an ice cream carton. The Hobart mixer was restarted and the mold release agent mixed with the liquid until it was completely wet out. The filler was next added to the pan contents (agitator off) then mixed, using medium to high speed, until a consistent paste was obtained. The mixer was again stopped and the weighed amount of thickening agent was mixed into the paste over a period of 2—3 minutes, the mixer was again stopped and ~175 grams of the paste were removed from the pan (using a large spatula) and transferred to a wide-mouthed 113.4 g (4 oz.) bottle. This paste sample was stored in the capped bottle at

room temperature and the viscosity was measured periodically using a Model HBT 5X Brookfield Synchro-Lectric Viscometer on a Helipath Stand.

After removal of the paste sample, the contents were reweighed and styrene loss made up, the chopped glass fibers were added slowly (from an ice cream carton) to the pan with the mixer running on slow speed. The mixer was run for ~30 seconds after all the glass was in the paste. This short time gave glass wet out without glass degradation. The pan was then removed from the mixer and separate portions of the BMC mix of ~450 grams each were removed using spatulas and transferred to aluminum foil lying on a balance pan (balance in the hood). The mix was tightly wrapped in the aluminum foil (to prevent loss of styrene via evaporation) and stored at room temperature until the viscosity of the retained paste sample reached molding viscosity. The weight of the BMC added to the foil varies with the molding applicaiton.

General Procedure for Preparation of Sheet Molding Compound (SMC) Formulations

All the liquid components were weighed individually into a 18.9 l (5 gallon) open top container placed on a Toledo balance. The contents of the container were then mixed (in a hood) with a high speed Cowles type dissolver. The agitator was started at a slow speed, then increased to medium speed to completely mix the liquids over a period of 2—3 minutes. The mold release agent and/or fatty acid was next added to the liquids from an ice cream carton and mixed until completely dispersed. The filler was next added gradually from a tared container until a consistent paste was obtained and the contents were then further mixed to a minimum temperature of 32°C (90°F). The thickener was next mixed into the paste over a period of 2—3 minutes, the mixer was stopped and ~175 grams of the paste was removed from the container and transferred to a wide-mouthed 113.4 g (4 oz.) bottle. The paste sample was stored in the capped bottle at room temperature and the viscosity measured periodically using a Model HBT 5X Brookfield Synchro-Lectric Viscometer on a Helipath Stand.

The balance of the paste is next added to the doctor boxes on the SMC machine where it is further combined with fiber glass (~2.54 cm (1″) fibers). The sheet molding compound (SMC) is then allowed to mature to molding viscosity and then molded into the desired article.

MOLDING FACILITIES

30.48 × 30.48 × 0.32 cm (12″ × 12″ × 1/8″) test panels

Flat panels for MCR surface evaluation are molded on a 75 TON Queens Hydraulic press. The press contains a matched dye set of 30.48 × 30.48 cm (12″ × 12″) chrome plated molds. The female cavity is installed in the bottom and the male portion is at the top. Both molds are electrically heated and are controlled on separate circuits so that the molds can be operated at different temperatures. For our molding the top and bottom temperature was 149°C (300°F). The molding pressure which can be varied from 0—75 TON was run at maximum pressure. The molds do not contain ejector pins; therefore, the molded panel is removed with a rubber suction cup and the use of a stream of air. The panels are laid on a flat surface, weighted to keep them flat and allowed to cool overnight. The molded panel is measured with a micro caliper from corner to corner in all four directions to determine shrinkage which is an average of the four readings. These panels are also used for surface smoothness determinations with the Bendix Profilometer. The lower the MCR number the smoother the surface.

Hood Scoops

Hood Scoops designed like miniature automobile hoods and containing a number of ribs and bosses of varying sizes was used to determine "sink", surface smoothness and overall moldability of sheet moulding compound formulations containing surface improvers. The hood scoop contains a large triangular boss (~4.8 cm (1.9″) base ~9.7 cm (3.8″) high) and 3 circular bosses (~1 cm (0.4″), ~2.3 cm (0.9″), ~3.6 cm (1.4″) diameter). It also contains a number of ribs of varying thickness and with different lead in radii.

Visual observations of these hood scoops as molded and after painting with a gloss black paint enables one to compare "sink" over the ribs and bosses, craze cracking, surface smoothness, glass pattern, laking and overall moldability. The hood scoop mold is installed in a 200 Ton Lawton hydraulic press. The molds contain ejector pins for release of the molded part and are heated with circulating oil. The male core is installed in the bottom of the press and the female cavity at the top. Temperatures of the two molds are controlled separately. Pressure of the press can be varied up to 200 Ton with variable time cycles so that the same part can be molded at several pressures. The speed at which the press closes can also be varied as well as the cure cycle for the molded part. All of these were varied during the molding of SMC formulations containing the surface improvers. Placement of the change pattern on the male core mold was also varied. The molded hood scoop was allowed to cool and was then evaluated.

Transfer Molding Press — Tree Mold

The molding press used is a 100 ton hydraulic press with an 45.72 × 30.48 cm (18″ × 12″) platen area. The press contains a tree mold. The tree mold has a number of cavities of varying length, shapes, and thickness. In molding the part a 180 g. charge of sheet molding compound (SMC) or bulk molding compound (BMC) is added to the ram port. The ram piston which has an adjustable pressure range of 0—138 bar (2000 psi) then pushes the charge into the tree mold cavities where it is cured. The gate sizes going into each cavity is 64 mm while the feed lines are approximately 126 mm.

DESCRIPTION OF MATERIALS

*Freeman Stypol 2955.* An unsaturated polyester resin from Freeman Chemical Company which is a high reactivity isophthalic acid modified resin containing approximately 35 weight percent of styrene monomer.

*BAKELITE LP—40A.* A product of Union Carbide Corporation which is a copolymer of vinyl acetate and acrylic acid (40 weight percent) dissolved in styrene (60 weight percent).

*Snowflake.* A calcium carbonate filler sold by *Thompson-Weimann, Inc.* having a mean particle size of 5 microns.

*TBPB.* tert-butylperbenzoate.

*Modifier M.* A 33 weight percent dispersion of magnesium oxide in an unsaturated polyester carrier vehicle sold by USS Chemicals/Polyester Unit.

*NR—3929.* A high reactivity isophthalic acid modified unsaturated polyester resin containing approximately 35 weight percent of styrene and sold by Rockwell International.

*PBQ.* Parabenzoquinone.

*PDO.* A 50% dispersion of tert-butylperoctoate in dioctyl phthalate sold by the *Lucidol Division* of Penwalt Corp.

*BAKELITE VR—3.* A mixture of commercial fatty acids sold by Union Carbide Corporation.

*JM 308.* A sized fiberglass reinforcement of 6,35 mm (1/4") length sold by Johns Manville Corp.

*CM—2015.* A black pigment dispersion provided by Plasticolors, Inc.

*BAKELITE LP—85.* A 33 weight percent solution of poly(vinyl acetate) in styrene sold by the Union Carbide Corporation.

*P—701.* A 33 weight percent solution in styrene of a methyl methacrylate based thermoplastic polymer sold by Rhom and Haas.

*NR—3529.* An unsaturated polyester resin made by the condensation of 1.0 mole of maleic anhydride and 1.1 moles of propylene glycol and containing approximately 33 weight percent of styrene and manufactured by Rockwell International.

*MR—13031.* A highly reactive unsaturated polyester resin believed to be ortho-phthalic anhydride modified containing approximately 40 weight percent of styrene sold by USS Chemicals Polyester Unit.

*OCF—951.* A fiberglass roving chopped to desired length on the sheet molding compound machine and sold by Owens Corning Fiberglass Corp.

*BAKELITE LP—100 Part B.* A proprietary anionic surface active agent sold by Union Carbide Corporation.

*Camel Wite.* A finely divided calcium carbonate filler of average diameter size of 2.5 μm supplied by H. T. Campbell.

*PDI 1803.* A black pigment dispersion sold by Pigment Dispersions, Inc.

*PG—9089.* A thickener dispersion containing a ratio of 3.75 parts magnesium hydroxide and 1.0 parts of $Ca(OH)_2$ at approximately 28 weight percent solids supplied by Plasticolors, Inc.

*Merck Marinco H.* A grade of magnesium hydroxide supplied by Merck and Company.

*Derakane 786.* A commercial styrene solution of a vinyl ester resin sold by Dow.

*Derakane 750.* A styrene solution of a polystyrene low profile additive.

*BAKELITE LP—60.* A 40 weight percent solution in styrene of a phthalic anhydride capped poly(caprolactone) polymer sold by Union Carbide.

*BAKELITE LP—100.* A 40 weight percent solution in styrene of a proprietory vinyl acetate based polymer sold by Union Carbide.

*Zelec UN.* An organophosphate mold release sold by E. I. DuPont De Nemours.

*BAKELITE LP—90.* A 40 weight percent solution of poly (vinyl acetate) in styrene sold by Union Carbide.

*TBC.* Tert-butyl catechol.

METHOD OF SHRINKAGE MEASUREMENT

A 30.48 × 30.48 × 0.32 cm (12" × 12" × 1/8") flat panel is molded in a highly polished chrome plated matched metal die mold in a 75 TON Queens Hydraulic press. The exact dimensions of the four sides of this mold are measured to the ten-thousandths of an inch at room temperature, The exact length of the four sides of the flat molded panel is also determined to the ten thousandths of an inch. These measurements are substituted into the equation below:

$$\frac{a-b}{a} = \text{cm/cm (inch/inch) shrinkage}$$

cm/cm (inch/inch) shrinkage × 1000 = μm/mm (mils/inch) shrinkage.

a = the sum of the lengths of the four sides of the mold.
b = the sum of the lengths of the four sides of the molded panel.

Since shrinkage control is normally reasonably indicative of the ability of a system to provide good surface smoothness characteristics, the use of the epoxides was examined in a "critical shrinkage control" formula used for screening either polyester resins or thermoplastic effectiveness. This system uses fairly standard resin, low profile additive and filler levels with reduced fiber glass reinforcement. The basic formula employed is presented in Table I. The structures of the epoxy compounds employed are shown in Table II and the results of the molding experiments are shown in Table III. All of the epoxide structures employed gave better shrinkage control than the control formula.

In all of the Tables presented herein the ingredients are given as parts by weight with the exception of the fiberglass reinforcement which is listed as weight % contained in the total molding compound.

A "critical shrinkage control" formula based on an acrylic thermoplastic (ROHM and HAAS PARAPLEX P—701) was also run to screen the effect of epoxide. This formulation is shown in Table IV along with the molding results. In these experiments only the AROFLINT 607 gave reduced shrinkage.

A similar formula using a vinyl ester resin (DOW DERAKANE 786) and a styrene-based thermoplastic (DOW 750) was also examined using epoxy compounds. The formulation and results are presented in Table V.

In order to confirm the improved shrinkage control observed with bulk molding compound compositions, several sheet molding compound runs were made and evaluated in test molds. The formulations for these runs are delineated in Table VI. The test molds for these experiments are described above.

TABLE I

BULK MOLDING COMPOUND

CRITICAL SHRINK

CONTROL FORMULA

| | 1 | 2 | 3 |
|---|---|---|---|
| Unsaturated Polyester Resin NR—3929 | 55 | 52.5 | 49.5 |
| UCC – LP—40A | 40 | → | → |
| Styrene | 5 | → | → |
| Epoxy Compound | – | 2.75 | 5.5 |
| Snowflake | 150 | → | → |
| TBPB | 0.5 | → | → |
| PDO (50%) | 1.0 | → | → |
| Zinc Stearate | 2 | → | → |
| BAKELITE VR–3 | 2 | → | → |
| Modifier M (33% MgO dispersion – USS Polyester) | 3.0 | → | → |
| 6.35 mm (1/4") Fiberglass (Wt. %) | 10 | → | → |

Molding Viscosity approximately 20,000 Pa's

Molding Conditions: 149°C (300°F) 2 minutes /68.95 bar (1000 psi)

TABLE II

STRUCTURES OF EPOXY COMPOUNDS

| Commercial Name (Supplier) | Structure or Description | Epoxide No. (Eq. Wt.) | Functionality |
|---|---|---|---|
| ERL-4221 (UCC) | 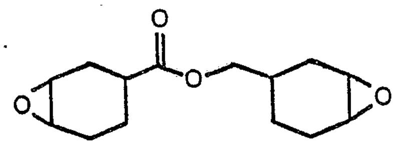 | 131-143 | 2 |
| ERL-4234 (UCC) | 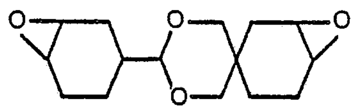 | 133-154 | 2 |
| ERL-4299 (UCC) | 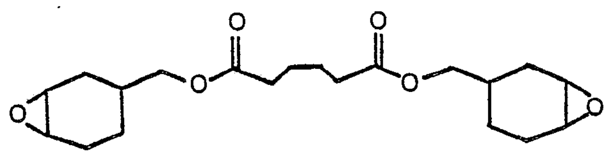 | 190-210 | 2 |
| Epon-828 (Shell) | 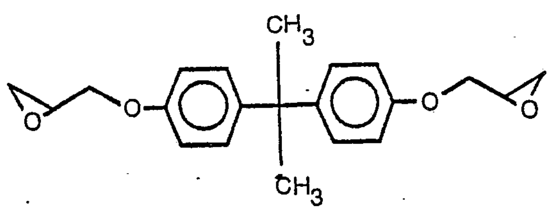 | 185-192 | 2 |
| EP-1404 | 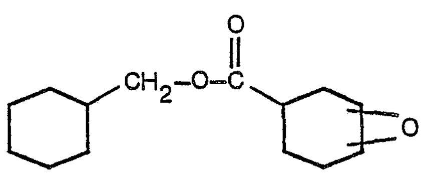 | | |
| Aroflint 607 (Ashland) | Epoxidized Pentaerythritol Tetratallate | (~280) | (~4.7) |
| FLEXOL Plasticizer EPO (UCC) | Epoxidized Soy Bean Oil | (~230) | (~4.4) |
| FLEXOL Plasticizer EP-8 (UCC) | Octyl Epoxytallate | (~320) | (~1.3) |
| FLEXOL Plasticizer LOE (UCC) | Epoxidized Linseed Oil | (~180) | (~5.6) |

TABLE III

RESULTS OF MOLDING EXPERIMENTS
USING THE FORMULATION OF TABLE I
SHRINKAGE μm/mm (Mils/Inch)

| | Amount of Epoxy Compound | | |
|---|---|---|---|
| Epoxy Compound | 0.0 | 2.75 | 5.5 |
| None | 0.88 | — | — |
| UCC—ERL—4221 | | 0.48 | 0.25 |
| UCC ERL—4234 | | 0.25 | 0.44 |
| UCC ERL—4299 | | 0.35 | 0.00 |
| Shell Epon—828 | | 0.00 | 0.19 |
| Ashland Aroflint—607 | | 0.17 | 0.00 |
| UCC FLEXOL EPO | | 0.16 | 0.00 |
| UCC FLEXOL EP—8 | | 0.17 | +0.20 |
| UCC FLEXOL LOE | | 0.19 | 0.00 |

TABLE IV

CRITICAL SHRINKAGE FORMULA
EPOXY COMPOUNDS WITH ACRYLIC THERMOPLASTIC

Formula

| | pbw |
|---|---|
| Unsaturated Polyester NR—3529 | 60 |
| Rohm & Haas P—701 | 40 |
| Epoxy Compounds | Varied |
| Snowflake | 150 |
| TBPB | 1.0 |
| Zinc Stearate | 4 |
| Modifier M (33% MgO Dispersion — USS Polyester) | 2.5 |
| 6.35 mm (¼") Fiberglass (Wt. %) | 10 |

| Epoxy Compound | Shrinkage μm/mm (Mils/Inch) Amount of Epoxy Compound | |
|---|---|---|
| | 2.75 | 5.5 |
| None | 1.9 | — |
| UCC ERL—4221 | 1.9 | 1.9 |
| UCC ERL—4234 | 1.9 | 2.0 |
| Shell Epon—828 | 2.0 | 2.0 |
| Ashland Aroflint—607 | 1.4 | 1.4 |

TABLE V

CRITICAL SHRINKAGE CONTROL FORMULA
VINYL ESTER SYSTEM WITH EPOXY COMPOUNDS

| | 1 | 2 | 3 | 4 |
|---|---|---|---|---|
| Derakane 786 | 63 | 63 | 63 | 63 |
| Derakane 750 | 37 | 37 | 37 | 37 |
| Snowflake | 150 | 150 | 150 | 150 |
| ERL—4221 | — | 3 | — | — |
| Epon—828 | — | — | 3 | — |
| FLEXOL LOE | — | — | — | 3 |
| Zinc Stearate | 4 | 4 | 4 | 4 |
| TBPB | 1.5 | 1.5 | 1.5 | 1.5 |
| Modifier M | 4.0 | 4.0 | 4.0 | 4.0 |
| 6.35 mm (¼″) Glass Fibers (Wt. %) | 10 | 10 | 10 | 10 |
| Shrinkage µm/mm (mils/inch) | 1.25 | 1.49 | 1.13 | 1.21 |

TABLE VI

SMC FORMULATION
FOR THE EVALUATION
OF EPOXY COMPOUNDS

| | 1 | 2 | 3 |
|---|---|---|---|
| Rockwell NR—3929[1] | 55 | 52.25 | 49.5 |
| UCC LP—40A | 40 | 40 | 40 |
| Styrene | 5 | 5 | 5 |
| Epoxy Compound | — | 2.75 | 5.5 |
| Snowflake | 150 | 150 | 150 |
| Water | 0.05 | 0.05 | 0.05 |
| TBPB | 0.5 | 0.5 | 0.5 |
| PDO (50%) | 1.0 | 1.0 | 1.0 |
| Zinc Stearate | 2 | 2 | 2 |
| BAKELITE Viscosity Reducer VR—3 | 2 | 2 | 2 |
| Modifier M[1] | 3.0 | 3.0 | 3.0 |
| OCF—951 2.54 cm (1″ Fibers), Wt. % | 26—28 | 26—28 | 26—28 |

[1] 100 ppm of parabenzequinone added.

Shrinkage control is generally improved by the inclusion of various epoxy compounds in these compositions. This was demonstrated by numerous experiments included in Tables I—VI exemplified by a comparison of experiments where ERL—4221 was absent which had a shrinkage of 0.88 μm/mm (mils/inch) and one containing 5.5 parts of ERL—4221 which exhibited a shrinkage of only 0.25 μm/mm (mils/inch). In addition surface appearance of complex hood scoop moldings judged visually after the application of a high gloss black paint were superior for formulations containing epoxy compounds. This evaluation technique is discussed below:

Surface evaluations of molded fiber reinforced plastic (FRP) parts with and without the epoxides was done two ways:

1. Bendix Profilometer; and
2. Visual observation
   a) unpainted hoods
   b) painted hoods

Bendix Profilometer or microrecorder was used to determine the surface smoothness of 30.48 × 30.48 cm (12″ × 12″) panels molded from the various SMC formulations. A diamond stylus connected to the Bendix Profilometer passes over the surface of the panels, measuring the hills and valleys. These recorded surface variations are averaged to give the MCR reading μm/m (micro inches/inch) recorded in the report.

The visual observations were done on miniature automobile hood scoops molded from the SMC formulations. The hood scoop contained a number of ribs and bosses of varying width and depth. Examination of this molded hood allows one to visually assess the "sink" over the ribs and bosses which is a measure of shrinkage control. It also allows one to evaluate how the materials have flowed over the part and down "draws". Waviness or rippling and fiber pattern on the molding can be observed as well as porosity. These hood scoops were evaluated by a panel of 2—3 people as they came out of the mold and after painting with a gloss black finish. Ratings were assigned from 1—6, with the highest number being best. A + or − sign indicates slightly better or worse than the number assigned.

Tensile strength determinations showed no deliterious effect of the epoxy-based formulations over those without epoxy present. In some cases increases of up to about 20 percent in tensile strength were observed. Panels containing the epoxides were baked at 204.5°C (400°F) for 30 minutes and displayed reduced discoloration as evidence of increased thermal stability compared with a control material. These data are shown in Table VII.

TABLE VII

RESULTS OF MOLDING OF THE SMC FORMULATIONS OF TABLE VI

| Epoxy Compound | / Amount | Molding Viscosity k Pa.s | Shrinkage Control (mils /inch)μm /mm | Tensile Strength (psi) N/mm² | Thermal(1) Discoloration | Visual Surface Evaluation(2) Painted Hood Scoop |
|---|---|---|---|---|---|---|
| None | – | 22.8 | 0.0 | (10,000) 68.95 | 0 | 2 |
| UCC ERL–4221 | 2.75 | 23.2 | 0.0 | (11,000) 75.85 | + | 3– |
| UCC ERL–4234 | 2.75 | 40.0 | 0.0 | (10,300) 71.02 | + | 3+ |
| UCC ERL–4299 | 2.75 | 40.0 | 0.0 | (10,700) 73.78 | + | 2+ |
| Shell Epon–828 | 2.75 | 37.6 | 0.0 | (11,800) 81.36 | + | 2+ |
| Ashland Aroflint–607 | 2.75 | 37.6 | 0.0 | (10,500) 72.40 | + | 3 |
| UCC FLEXOL EPO | 2.75 | 27.2 | +0.67 | (11,000) 75.85 | – | 2+ |
| UCC FLEXOL EP–8 | 2.75 | 20.8 | +0.71 | (11,700) 80.67 | – | 3 |
| UCC FLEXOL LOE | 2.75 | 20.8 | +0.40 | (10,400) 71.71 | – | 3– |
| UCC ERL–4221 | 5.5 | 26.4 | +0.79 | (10,900) 75.16 | – | 4 |
| UCC ERL–4234 | 5.5 | 34.4 | +0.75 | (12,000) 82.74 | 0 | 3 |
| UCC ERL–4299 | 5.5 | 49.6 | +0.78 | (12,400) 85.50 | 0 | 2+ |
| Shell Epon–828 | 5.5 | 23.2 | +0.81 | (11,800) 81.36 | 0 | 4 |
| Ashland Aroflint–607 | 5.5 | 22.4 | +0.75 | (10,800) 74.47 | 0 | 3– |
| FLEXOL EPO | 5.5 | 45.6 | +0.83 | (11,500) 79.29 | 0 | 3– |
| FLEXOL EP–8 | 5.5 | 39.2 | +0.94 | (11,600) 79.98 | 0 | 3– |
| FLEXOL LOE | 5.5 | 43.2 | +0.90 | (11,400) 78.60 | –2 | 3 |

Flat panels 30.48 × 30.48 cm (12" × 12") molded at 149°C (300°F) / 2 minutes / 75 tons / 450 g.

(1) After treating the molded panels 30.48 × 30.48 cm (12" × 12") at 204°C (400°F) for 30 minutes the discoloration was observed as a function of thermal stability. 0 = control; + lighter than control; – slightly darker than control; –2 much darker than control.

(2) Hood scoop molding 800 g/154°C (310°F)/2 minutes 68.95 bar (1000 psi) painted with a gloss black and visually evaluated for surface. Lowest number – worst; highest number – best.

Table VIII depicts the reduction to practice of the compositions of this invention. Visual examination of the unpainted hood scoops molded from the epoxy formulations were superior to the control formula containing no epoxy. similar formulas were repeated with another polyester resin and visual evaluation of the painted hood scoop moldings confirmed the initial observations.

The surface appearance of the molded parts from Experiment 2 were better than those from Experiment 1 and the parts from Experiment 3 were better than those of Experiment 4.

TABLE VIII

(SMC FORMULATIONS (PARTS BY WEIGHT).

| | 1 | 2 | 3 | 4 |
|---|---|---|---|---|
| Freeman Stypol 40—2955 | 60 | 57 | — | — |
| Rockwell International NR—3929[(1)] | — | — | 52.25 | 55 |
| UCC LP—40A | 35 | 35 | 40 | 40 |
| UCC ERL—4221 | — | 3 | 2.75 | — |
| Styrene | 5 | 5 | 5 | 5 |
| Snowflake | 150 | 150 | 150 | 150 |
| Zinc Stearate | 4 | 4 | 2 | 2 |
| VR—3 | — | — | 2 | 2 |
| TBPB | 1.2 | 1.2 | 0.5 | 0.5 |
| PDO (50%) | — | — | 0.5 | 0.5 |
| USS Modifier M | 2.5 | 2.5 | — | — |
| Merck Marinco H | — | — | 2.4 | 2.4 |
| $Ca(OH)_2$ | — | — | 0.8 | 0.8 |
| OCF—951 2.54 cm (1″) Wt. % | 30.2 | 30.2 | 27.9 | 26.9 |
| Molded 149°C (300°F)/2 minutes/75 tons 30.48 × 30.48 cm (12″ × 12″) | | | | |
| Shrinkage µm/mm (mils/inch) | 0.46 | 0.10 | | |
| Tensile Strength, $N/mm^2$ (psi) | 68.67 (9960) | 62.81 (9110) | | |
| Flex. Strength, $N/mm^2$ (psi) | 110.50 (16,026) | 145.76 (21,140) | | |
| Notched Izod Impact cm.Kg/cm (ft—lbs/inch) | 62.65 (11.5) | 58.84 (10.8) | | |
| Surface Appearance (Molded Hood Scoops) | 2 is better than 1 | | 3 is better than 4 | |

(1) Added an extra 110 ppm PBQ

Another series of sheet molding compound runs was made using a different structural unsaturated polyester resin, USS Polyester Divisions MR—13031 resin as a contrast with the polyester resin used in the above-described experiments. The formulations and surface appearance ratings on the painted hood scoops are given in Table IX. Again it is apparent that the presence of the epoxy compound (ERL—4221) improves the overall surface appearance.

TABLE IX

SMC EXPERIMENTS WITH ERL— 4221 AND USS—13031 RESIN

| | | | | |
|---|---|---|---|---|
| USS 13031[(1)] | 65 | 62 | 60 | 65 |
| LP—40A | 28 | 28 | 28 | 28 |
| ERL—4221 | — | 3 | 6 | 6 |
| Snowflake | 142 | 142 | 142 | 142 |
| BAKELITE VR—3 | 2 | 2 | 2 | 2 |
| Zinc Stearate | 2 | 2 | 2 | 2 |
| TBPB | 0.75 | 0.75 | 0.75 | 0.75 |
| PDO (50%) | 1.5 | 1.5 | 1.5 | 1.5 |
| B Side[(2)] | 22.1 | 22.1 | 22.1 | 22.1 |
| OCF—951 2.54 cm (1") Fibers, Wt. % | 27.1 | 27.2 | 26.9 | 28.0 |
| SMC — 6,1 Kg/$m^2$ (20-oz/sq. ft.) | | | | |
| Molding Viscosity kPa·s — Brookfield HBT 5X/TF/5 rpm | 20.0 | 23.2 | 21.6 | 19.2 |
| Painted Hood Scoop — Surface Appearance [(3)] | 2– | 3+ | 3+ | 3+ |
| Rating [(4)] | 3—3+ | — | — | 4 |

[(1)] An extra 100 ppm of parabenzoquinone was added to the resin
[(2)] Weight % — BAKELITE LP—85 50; Snowflake 42; PDI—1803 Pigment 3; Maglite A (MgO -Merck) 5 percent as a predispersion
[(3)] 800 g. 141°C (285°F)/68.95 bar (1000 psi)/90 seconds/C—5 close
[(4)] 800 g. 149°C (300°F)/68.95 bar (1000 psi)/90 seconds/C—5 close

Other sheet molding compounds using EP—1404 epoxide was used. The formulation and the shrinkage thereof are shown in Table X.

TABLE X

| Run No. | 1 | 2 | 3 |
|---|---|---|---|
| Formulation | | | |
| Freeman Stypol 40—2955 | 65 | 65 | 65 |
| UCC LP—40A | 35 | 35 | 35 |
| EP 1404 | — | 3 | 6 |
| Snowflake | 150 | 150 | 150 |
| t-Butyl Perbenzoate | 1.5 | 1.5 | 1.5 |
| Zinc Stearate | 4 | 4 | 4 |
| USS Modifier M | 3 | 3 | 3 |
| 6.35 mm (¼") Glass (wt.%) | 10 | 10 | 10 |
| Molding Viscocity, k Pa·s | 35 | 33 | 34 |
| Shrinkage, µm/mm (mils/inch) | 1.04 | 0.8 | 0.3 |
| Molding parameters | 2 mins/149°C (300°F)/75 tons | | |

BMC TRANSFER MOLDING EXPERIMENTS

Many rippling and waviness problems in both SMC and BMC parts occur near the edge of the molding (shear edges) after some significant compound flow. To simulate this, experiments were carried out upon a transfer mold. In this type of press a charge is rammed into the mold after closure. The mold is complex and designed to study flow and to make moldings for ASTM tests. At the end of the flow area on the 10.16 cm (4-inch) disc, ripples are often times observed. The formulations given in Table XI were molded on this press and surface measurements of the last 2.54—3.81 cm (1—1.5 inches) of the flow in the 4-inch disc, measured in the molded part using a Bendix Profilometer were taken. Both epoxy compounds examined (ERL—4221 and EPON—828) afforded greatly improved surface smoothness in these regions.

TABLE XI

TRANSFER MOLDING FORMULATIONS

| | 1 | 2 | 3 | 4 | 5 |
|---|---|---|---|---|---|
| Rockwell International NR—3929 | 55 | 55 | 55 | 55 | 55 |
| LP—40 | 40 | 40 | 40 | 40 | 40 |
| Styrene | 5 | 5 | 5 | 5 | 5 |
| ERL—4221 | — | 3 | 6 | — | — |
| Epon—828 | — | — | — | 3 | 6 |
| Snowflake | 180 | 180 | 180 | 180 | 180 |
| TBPB | 1.5 | 1.5 | 1.5 | 1.5 | 1.5 |
| BAKELITE VR—3 | 2 | 2 | 2 | 2 | 2 |
| Zinc Stearate | 2 | 2 | 2 | 2 | 2 |
| parabenzoquinone | 0.01 | 0.01 | 0.01 | 0.01 | 0.01 |
| Merck Marinco H | 2.4 | 2.4 | 2.4 | 2.4 | 2.4 |
| $Ca(OH)_2$ | 0.8 | 0.8 | 0.8 | 0.8 | 0.8 |
| Fiberglass 6.35 mm (¼"), Wt. % | 20 | 20 | 20 | 20 | 20 |
| MCR* | 409 | 126 | 68 | 61 | 43 |
| Tensile Strength, (psi) $N/mm^2$ | (4540) 31.3 | (5600) 38.6 | (4675) 32.2 | (6067) 41.8 | (5185) 35.8 |

*Taken on last 2.54—3.81 cm (1—1½ inches) of 10.16 cm (4") disc. Bendix Profilometer μm/m (micro inches/inch). Lowest number is the smoothest.

BMC COMPRESSION MOLDING EXPERIMENTS

BMC experiments containing low profile additives LP—100 and LP—60 were run incorporating epoxy compounds at 150 phr (parts per hundred of resin) of filler and 15 weight percent fiber glass reinforcement. These formulations, as well as shrinkage control and relative pigmentability ratings are presented in Table XI. These experiments demonstrate improved shrinkage control with all classes of epoxy resins tried. The pigmentation rating is 1 = best, 3 = worst.

TABLE XII

EXPERIMENTS WITH LP–100 AND LP–60

| | 1 | 2 | 3 | 4 | 5 | 6 | 7 | 8 | 9 | 10 | 11 | 12 | 13 | CONTROL 13 |
|---|---|---|---|---|---|---|---|---|---|---|---|---|---|---|
| Formulation | | | | | | | | | | | | | | |
| 3829 (Rockwell Int.) | 60 | → | → | → | → | → | → | → | → | → | → | → | → | → |
| LP–60 | 35 | → | → | → | → | → | → | – | – | – | – | – | – | – |
| LP–100 | – | – | – | – | – | – | – | 35 | → | → | → | → | → | → |
| Styrene | 5 | → | → | → | → | → | → | → | → | → | → | → | → | → |
| ERL–4221 | – | 3 | 5 | – | – | – | – | 3 | 6 | – | – | – | – | – |
| Aroflint 607 | – | – | – | 3 | 6 | – | – | – | – | 3 | 6 | – | – | – |
| FLEXOL Plasticizer 309 | – | – | – | – | – | 3 | 6 | – | – | – | – | 3 | 6 | – |
| Snowflake | 150 | → | → | → | → | → | → | → | → | → | → | → | → | → |
| TBPB | 1.0 | → | → | → | → | → | → | → | → | → | → | → | → | → |
| Zinc Stearate | 4 | → | → | → | → | → | → | → | → | → | → | → | → | → |
| BAKELITE LP–100 Part B (50% in Styrene) | – | – | – | – | – | – | – | 3 | → | → | → | → | → | → |
| CM–2015 Pigment | 7 | → | → | → | → | → | → | → | → | → | → | → | → | → |
| Modifier M | 2.4 | → | → | → | → | → | → | → | → | → | → | → | → | → |
| JM 308–A, Wt. %, 6.35 mm (¼") fibers | 15 | → | → | → | → | → | → | → | → | → | → | → | → | → |
| Viscosity, k Pa.s | | | | | | | | | | | | | | |
| Initial | – | – | – | – | | | | – | – | – | – | – | – | – |
| 1 Day | 4.0 | 1.6 | 1.2 | 5.6 | | | | 40.8 | 36.8 | 45.6 | 40.0 | 45.6 | 37.6 | 52.8 |
| 2 Days | 10.0 | 6.0 | 4.4 | 14.4 | | Exuded | | – | – | – | – | – | – | – |
| 3 Days | – | – | – | – | | Badly | | – | – | – | – | – | – | – |
| 4 Days | – | – | – | – | | Not | | – | – | – | – | – | – | – |
| 5 Days | – | – | – | – | | Molded | | – | – | – | – | – | – | – |
| 6 Days | – | 17.0 | 16 | – | | | | – | – | – | – | – | – | – |

TABLE XII

EXPERIMENTS WITH LP–100 AND LP–60

| | 1 | 2 | 3 | 4 | 5 | 6 | 7 | 8 | 9 | 10 | 11 | 12 | 13 | CONTROL 13 |
|---|---|---|---|---|---|---|---|---|---|---|---|---|---|---|
| Physical Properties | | | | | | | | | | | | | | |
| Shrink, μm/mm (mils/inch) | 0.67 | 0.69 | 1.04 | 0 | | | | 0.5 | 0 | 0 | 0 | 0 | 0 | 1.08 |
| Pigmentation | 3 | 3 | 2 | 3 | | | | 2 | 2 | 2 | 3 | 2 | 1 | 1–2 |

CONTROL EXPERIMENTS

Control Experiments were run in which the thermoplastic additive was excluded from the formulation and the epoxy compound was used to control shrinkage. The formulations are shown in Table XIII. These warped badly, indicating little or no direct influence of the epoxy alone to control shrinkage.

TABLE XIII

EXPERIMENTS EXCLUDING LOW PROFILE ADDITIVES

| | 1 | 2 | 3 |
|---|---|---|---|
| Rockwell International NR–3929 | 91.7 → | | |
| Styrene | 8.3 → | | |
| ERL–4221 | 20 | – | – |
| Epon–828 | – | 20 | – |
| FLEXOL EPO | – | – | 20 |
| Snowflake | 250 → | | |
| VR–3 | 3.3 → | | |
| Zinc Stearate | 3.3 → | | |
| TBPB | 2.5 → | | |
| Modifier M | 5.0 → | | |
| 6.35 mm (¼") Fiberglass (Wt. %) | 10 → | | |
| 5 Day Viscosity, k Pa.s | 20 | 10 | Bad Exudation |
| Molding Conditions | | | |
| 149°C (300°F) / 2 minutes / 75 tons | | | |

All panels warped badly.

In order to demonstrate the applicability of the invention to unthickened formulations surface measurements were taken on the four formulations shown in Table XIV.The Bendix Profilometer test shows lower MCR numbers for formulations containing epoxy compounds than for the first which contained no epoxy compound (Control 1).

TABLE XIV

| | Control 1 | Run 2 | Run 3 | Run 4 |
|---|---|---|---|---|
| NR–3529 | 368.5 → | | | |
| LP–40A | 105 → | | | |
| Styrene | 26.5 → | | | |
| 0.5% TBC in Styrene | 1.0 → | | | |
| Zelec UN | 6.5 → | | | |
| Snowflake | 580.0 → | | | |
| PDO (50%) | 7.0 → | | | |
| Zinc Stearate | – | – | – | 15 |
| Flexol EP–8 | – | 15 | 30 | – |
| Flexol EPO | – | – | – | 30 |
| MCR | 158.0 | 134 | 83 | 29 |
| Glass Mat (OCF–8601) Wt. % | 30 | 30 | 30 | 30 |

Molding conditions 127°C (260°F) for 2.5 minutes.

Critical shrinkage experiments were also carried out on unthickened compositions using 10% thermoplastic low profile additive respectively. The formulations containing epoxy compounds were superior to Control 1a as demonstrated in Table XV.

TABLE XV

| | Control 1a | Run 2a | Run 3a |
|---|---|---|---|
| NR—3929 | 65 | 65 | 65 |
| LP—90 | 25 | 25 | 25 |
| Styrene | 10 | 10 | 10 |
| ERL—4221 | — | 5 | — |
| EPO | — | — | 5 |
| Snowflake | 150 | 150 | 150 |
| Zinc Stearate | 2 | 2 | 2 |
| VR—3 | 2 | 2 | 2 |
| TBPB | 1.5 | 1.5 | 1.5 |
| Glass Wt.% | 110 | 10 | 10 |
| Shrinkage µm/mm (mils/inch) | 0.31 | 0.21 | 0.0 |

**Claims**

1. A low shrink curable molding composition containing a thermosetting unsaturated polyester, a thermoplastic low profile additive for shrinkage control, and an ethylenically unsaturated polymerizable monomer suitable for use in molding applications, characterized in that said composition additionally comprises an epoxy compound having at least one 1,2-epoxy group per molecule.

2. Composition claimed in claim 1 wherein the epoxy compound has the structure

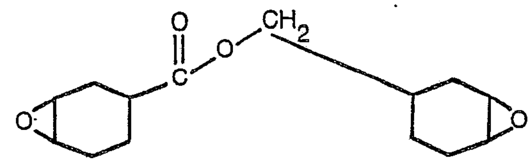

3,4-epoxycyclohexylmethyl-3,4-epoxycyclohexane carboxylate; or

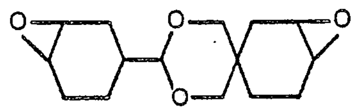

3-(3,4-epoxycyclohexane)-8,9-epoxy-2,4-dioxaspiro[5.5]-undecane; or

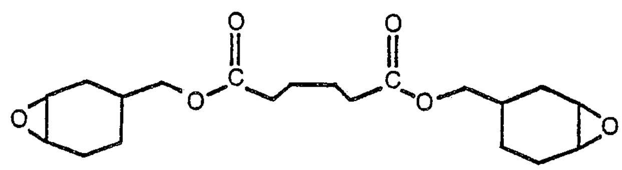

bis (3,4-epoxy-cyclohexylmethyl) adipate; or

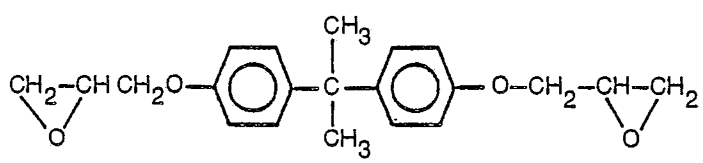

or

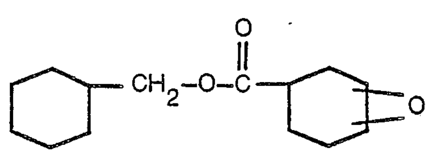

3. Composition claimed in claim 1 or 2 wherein the epoxy compound is epoxidized pentaerythritol tetratallate, epoxidized soy bean oil, octyl epoxytallate or epoxidized linseed oil.

4. Composition claimed in any of claims 1 to 3 containing a thickening amount of a chemically active thickening agent, preferably magnesium oxide.

5. Composition claimed in any of claims 1 to 4 wherein the low profile additive is a polyvinyl acetate, preferably a carboxylated polyvinyl acetate.

6. Composition claimed in any of claims 1 to 5 containing a reinforcing filler, preferably glass fibre.

7. Composition claimed in any of claims 1 to 6 containing a rubber or elastomer.

8. A molded article produced from the composition of any of claims 1 to 7.

**Patentansprüche**

1. Härtbare Formmasse mit geringer Schrumpfung, enthaltend einen hitzehärtbaren ungesättigten Polyester, ein thermoplastisches Low-Profile-Additiv für die Schrumpfungsregelung und ein ethylenisch ungesättigtes polymerisierbares Monomer, das für Formanwendungen geeignet ist, dadurch gekennzeichnet, daß die Masse zusätzliche eine Epoxyverbindung mit mindestens einer 1,2-Epoxygruppe pro Molekül umfäßt.

2. Masse nach Anspruch 1, worin die Epoxyverbindung die Struktur

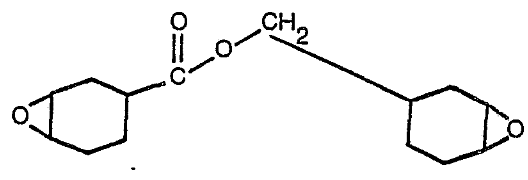

3,4-Epoxycyclohexylmethyl-3,4-epoxycyclohexancarboxylat; oder

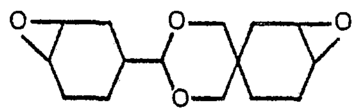

3-(3,4-Epoxycyclohexan)-8,9-epoxy-2,4-dioxaspiro[5,5]-undecan; oder

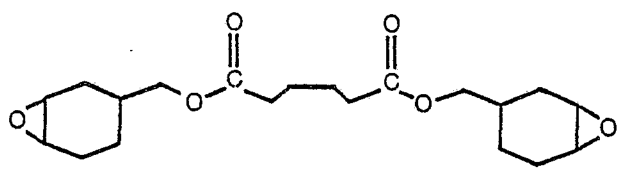

Bis(3,4-epoxy-cyclohexylmethyl)-adipat; oder

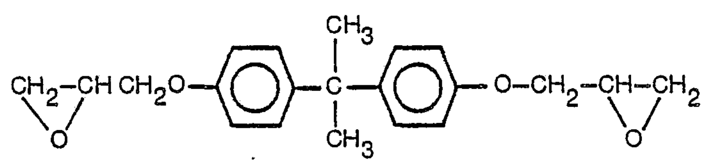

oder

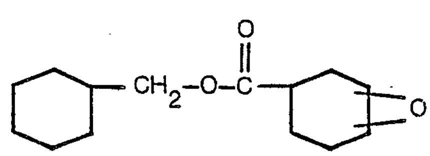

3. Masse nach Anspruch 1 oder 2, worin die Epoxyverbindung epoxidiertes Pentaerythrit-tetratallat, epoxidiertes Sojaöl, Octylepoxytallat oder epoxidiertes Leinöl ist.

4. Masse nach irgendeinem der Ansprüche 1 bis 3, enthaltend eine verdickende Menge eines chemisch aktiven Verdikkungsmittels, vorzugsweise Magnesiumoxid.

5. Masse nach irgendeinem der Ansprüche 1 bis 4, worin das Low-Profile-Additiv ein Polyvinylacetat ist, vorzugsweise ein carboxyliertes Polyvinylacetat.

6. Masse nach irgendeinem der Ansprüche 1 bis 5, enthaltend einen verstärkenden Füllstoff, vorzugsweise Glasfasern.

7. Masse nach irgendeinem der Ansprüche 1 bis 6, enthaltend einen Kautschuk oder ein Elastomer.

8. Formteil, hergestellt aus der Masse nach irgendeinem der Ansprüche 1 bis 7.

**Revendications**

1. Composition moulable réticulable à faible retrait contenant un polyester insaturé thermodurcissable, un additif thermoplastique bas profil pour limiter le retrait, et un monomère polymérisable à insaturation éthylénique apte à être utilisé dans des applications de moulage, caractérisée en ce qu'elle renferme, en outre, un composé époxy ayant au moins un groupe 1,2-époxy par molécule.

2. Composition suivant la revendication 1, dans laquelle le composé époxy répond à la formule:

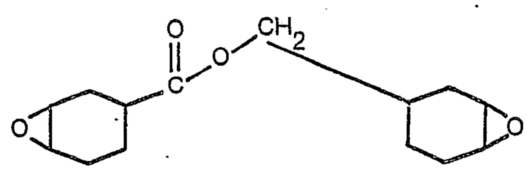

3,4-époxycyclohexane-carboxylate de 3,4-époxycyclohexylméthyle; ou

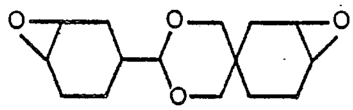

3-(3,4-époxycyclohexane)-8,9-époxy-2,4-dioxaspiro[5.5]-undécane; ou

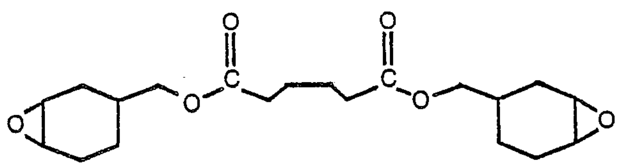

adipate de bis(3,4-époxy-cyclohexylméthyl); ou

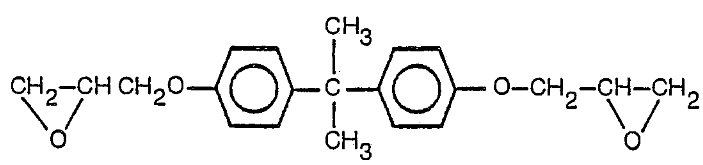

ou

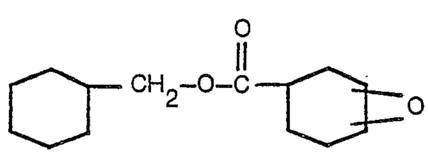

3. Composition suivant la revendication 1 ou 2, dans laquelle le composé époxy est le tétratallate de pentaérythritol époxydé, l'huile de soja époxydée , l'époxytallate d'octyle ou l'huile de lin époxydée.

4. Composition suivant l'une quelconque des revendications 1 à 3, contenant une quantité épaississante d'un agent épaississant chimiquement actif, de préférence l'oxyde de magnésium.

5. Composition suivant l'une quelconque des revendications 1 à 4, dans laquelle l'additif bas profil est un acétate de polyvinyle, de préférence un acétate de polyvinyle carboxylé.

6. Composition suivant l'une quelconque des revendications 1 à 5, contenant une charge de renforcement, de préférence de la fibre de verre.

7. Composition suivant l'une quelconque des revendications 1 à 6, contenant un caoutchouc ou un élastomère.

8. Article moulé produit à partir de la composition suivant l'une quelconque des revendications 1 à 7.